# EUROPEAN PATENT APPLICATION

(11) **EP 1 750 315 A1**
(43) Date of publication of application: **07.02.2007**
(21) Application number: 04802567.0
(22) Date of filing: 29.12.2004
(51) Int. Cl.: H01M 4/42, H01M 6/06

(54) **ZINC PLATE FOR ZINC-MANGANESE DRY BATTERY AND FORMING METHOD OF THE SAME**

(30) Priority: 16.11.2004 CN 200410092881
(71) Applicant: Chung Pak Battery Works Ltd.,, Kowloon, Hong Kong (CN)
(72) Inventor: YE, Jinhua, Yau Tong Bay, Kowloon, Hong Kong (CN)
(74) Representative: Kramer - Barske - Schmidtchen
(86) International application number: PCT/CN2004/001555
(87) International publication number: WO 2006/053466

(57) **Abstract**

The present invention relates to dry cells. Disclosed is a zinc plate for Zn/MnO₂ dry cell comprising (by weight): 0.0005~0.0030 % magnesium; 0.001∼0.005 % indium or 0.0005∼0.005 % tin; 0∼0.004 % lead; 0∼0.0005 % cadmium and the rest being zinc. Also disclosed is a method of preparing said zinc plate for Zn/MnO₂ dry cells comprising: using zinc ingots of which zinc content is above 99.9955%, cadmium content≦ 0.0005% and lead content≦ 0.004%, adding 0.0005∼0.0030% magnesium, 0.001∼0.005% indium or 0.0005∼0.005% tin; casting into thick plate under casting temperature of 400°C ~500°C, rolling, cutting, and obtaining the zinc plate. It is necessary to add lead and cadmium for the preparation of the prior art zinc plates used in Zn/MnO₂ dry cell negative electrode body, whereas metal indium or tin is added in place of lead and cadmium for the preparation of the zinc plates of the present invention. Compared with prior arts, an advantage of the Zn/MnO₂ dry cells of the present invention is that they are free of lead and cadmium, and the preparing process without the addition of lead and cadmium does not lead to environmental pollution, and meets the requirements of environmental protection.

## Description

### FIELD OF THE INVENTION

The present invention relates to Zn/MnO₂ dry cells and more particularly to zinc plates for Zn/MnO₂ dry cells and the preparing method thereof.

### BACKGROUND OF THE INVENTION

The negative electrode body of the commonly used Zn/MnO₂ dry cell is a zinc can. In order to improve the ductility and strength of zinc metal, it is necessary to add 0.3-0.5% lead (Pb), 0.001-0.005% cadmium (Cd) and 0.0005-0.0030% magnesium (Mg) during zinc casting. Lead and cadmium are heavy metals, their uses being restricted by international environmental protection organizations, so, it is necessary to obtain zinc particles for Zn/MnO₂ dry cells, which are free of lead and cadmium for the purpose of environmental protection.

### SUMMARY OF THE INVENTION

This invention provides a zinc plate for a Zn/MnO₂ dry cell, which is fabricated without the addition of lead and cadmium.

This invention also provides a method for preparing said zinc plate for a Zn/MnO₂ dry cell.

To achieve the object of the present invention, the zinc plate for a Zn/MnO₂ dry cell comprises (by weight):
0.0005∼0.0030 % magnesium;
0.001~0.005 % indium or 0.0005∼0.005 % tin;
0~0.004 % lead;
0∼0.0005 % cadmium;
the rest being zinc.

Another object of this invention can thus be achieved: the method for preparing said zinc plate for a Zn/MnO₂ dry cell comprises: zinc ingots of which zinc content is above 99.9955%, cadmium content≦ 0.0005% and lead content≦ 0.004% are used, and 0.0005∼0.0030% magnesium, 0.001∼0.005% indium or 0.0005∼0.005% tin are added; then it is cast into thick plate under casting temperature of 400°C~500°C, rolled, and cut, finally the zinc plate is obtained.

It is necessary to add lead and cadmium for the preparation of the prior art zinc plates used in Zn/MnO₂ dry cells, whereas metal indium or tin is added in place of lead and cadmium for the preparation of the zinc plates of the present invention. Compared with prior arts, an advantage of the zinc plates for Zn/MnO₂ dry cells of the present invention is that they are free of lead and cadmium, the preparing process without the addition of lead and cadmium does not lead to environmental pollution, and meets the requirements of environmental protection.

### DETAILED DESCRIPTION OF THE INVENTION

The zinc plate of the present invention comprises (by weight):
0.0005∼0.0030 % magnesium;
0.001~0.005 % indium or 0.0005∼0.005 % tin;
0∼0.004 % lead;
0∼0.0005 % cadmium;
the rest being zinc.

The conventional process was adopted for preparing the zinc plate of this Invention.

Zinc ingots of which zinc content is above 99.9955%, cadmium content≦ 0.0005% and lead content≦ 0.004% are used, and 0.0005∼0.0030% magnesium, 0.001~0.005% indium or 0.0005∼0.005% tin were added. It is cast into thick plate under casting temperature of 400°C~500°C, rolled, and cut with required sizes, then the zinc plate is obtained.

### EMBODIMENT 1

The zinc plate of this embodiment comprised (by weight):
0.0015 % magnesium;
0.001 % indium;
0.0018 % lead;
0.0002 % cadmium;
the rest being zinc.

The conventional process was adopted for preparing the zinc plate of this embodiment.

0.0015% magnesium and 0.001% indium is added instead of lead and cadmium; A thick plate is cast under casting temperature of 400°C~500°C, then rolled, and cut with required sizes, the zinc plate is obtained.

### EMBODIMENT 2

This embodiment is essentially the same as embodiment 1, except that the indium content of said composition is 0.002%, thus a zinc plate containing magnesium and 0.002% indium for the Zn/MnO₂ dry cell is obtained.

### EMBODIMENT 3

This embodiment was essentially the same as embodiment 1, except that the indium content of said composition is 0.005%, thus a zinc plate containing magnesium and 0.005% indium for the Zn/MnO₂ dry cell is obtained.

### EMBODIMENT 4

This embodiment was essentially the same as embodiment 1, except that 0.0005% tin is used instead of said indium, thus a zinc plate containing magnesium and 0.005% tin for the Zn/MnO₂ dry cell is obtained.

### EMBODIMENT 5

This embodiment was essentially the same as embodiment 4, except that the tin content of said composition is 0.002%, thus a zinc plate containing magnesium and 0.002% tin for the Zn/MnO₂ dry cell is obtained.

### EMBODIMENT 6

This embodiment was essentially the same as embodiment 4, except that the tin content of said composition is 0.005%, thus a zinc plate containing magnesium and 0.005% tin for the Zn/MnO₂ dry cell is obtained.

The obtained zinc plates of embodiment 1 to 6 were tested with Atomic Absorption Spectrometer (AAS), and the contents of lead and cadmium in the 6F22 type Zn/MnO₂ dry cells obtained were calculated. The results are listed as follows:

| Embodiment | Amounts of addition (%) | | | | | Analyzed results of zinc plates (%) | | Calculated results of the cells (%) | |
|---|---|---|---|---|---|---|---|---|---|
| | Lead (%) | Cadmium (%) | Magnesium (%) | Indium (%) | Tin (%) | Lead (%) | Cadmium (%) | Lead (%) | Cadmium (%) |
| Embodiment 1 | 0 | 0 | 0.0015 | 0.001 | 0 | 0.0018 | 0.0002 | 0.0003 | 0.00003 |
| Embodiment 2 | 0 | 0 | 0.0015 | 0.002 | 0 | 0.0018 | 0.0002 | 0.0003 | 0.00003 |
| Embodiment 3 | 0 | 0 | 0.00 1 | 0.005 | 0 | 0.0018 | 0.0002 | 0.0003 | 0.00003 |
| Embodiment 4 | 0 | 0 | 0.0015 | 0 | 0.0005 | 0.0018 8 | 0.0002 | 0.0003 | 0.00003 |
| Embodiment 5 | 0 | 0 | 0.0015 | 0 | 0.002 | 0.0018 | 0.0002 | 0.0003 | 0.00003 |
| Embodiment 6 | 0 | 0 | 0.0015 | 0 | 0.005 | 0.0018 | 0.0002 | 0.0003 | 0.00003 |
| Comparative Embodiment (Presently used) | 0.4 | 0.0005 | 0.0015 | 0 | 0 | 0.45 | 0.0004 | 0.047 | 0.00004 |

Note: 98/101/EEC specifications: lead< 0.4 %, cadmium< 0.025 %. The R6 Zn/MnO₂ cells are fabricated with the zinc plates obtained from embodiment 1 to 6. The shelf performances of the primary cells and the cells shelved at 60 °C and 90 % RH for 10 days are compared with the performance of the cell presently used (the negative electrode containing 0.3∼0.5 % lead and 0.0005- 0.004 % cadmium). (Evaluated at 20 °C):

| Embodiment | Comparison of the shelf performances of the cells | | | |
|---|---|---|---|---|
| | Primary cells (within 15 days) | | Cells shelved at 60 °C and 90 % RH for 10 days | |
| | Open-circuit Voltage (V) | 5 Ω Load Voltage (V) | Open-circuit Voltage (V) | 5 Ω Load Voltage (V) |
| Embodiment 1 | 1.70 | 1.55 | 1.59 | 1.46 |
| Embodiment 2 | 1.70 | 1.55 | 1.60 | 1.48 |
| Embodiment 3 | 1.70 | 1.55 | 1.59 | 1.47 |
| Embodiment 4 | 1.70 | 1.55 | 1.59 | 1.46 |
| Embodiment 5 | 1.70 | 1.55 | 1.60 | 1.47 |
| Embodiment 6 | 1.70 | 1.55 | 1.59 | 1.47 |
| Comparative Embodiment (Presently used) | 1.70 | 1.55 | 1.61 | 1.47 |

From said embodiments and results, it can be seen that the results of embodiment 2, 3, 4 and 5 are better.

From above results, it can be seen that both of the contents of lead and cadmium of the Zn/MnO₂ dry cells of the present invention are within the maximum allowable level of 98/101/EEC specifications. Lead content is under 0.004%, cadmium content is under 0.0005%, both satisfying the requirement of environmental protection, and can be used as Pb-free and Cd-free Zn/MnO₂ battery.

Although the present invention has been fully described by way of embodiments, it is noted that the descriptions are not limitations of the invention, various changes of the embodiments with reference to the descriptions will be apparent to those skilled in the art, and they should be considered as being included within the scope and spirit of the appended claims.

## Claims

1. A zinc plate for Zn/MnO₂ dry cell comprising (by weight):
0.0005∼0.0030 % magnesium;
0.001∼0.005 % indium or 0.0005∼0.005 % tin;
0∼0.004 % lead;
0∼0.0005 % cadmium;
the rest being zinc.

2. The zinc plate for Zn/MnO₂ dry cell according to claim 1, wherein the zinc plate comprises (by weight):
0.0015 % magnesium;
0.001 % indium;
0.0018 % lead;
0.0002 % cadmium;
the rest being zinc.

3. The zinc plate for Zn/MnO₂ dry cell according to claim 1, wherein the zinc plate comprises (by weight):
0.0015 % magnesium;
0.002 % indium;
0.0018 % lead;
0.0002 % cadmium;
the rest being zinc.

4. The zinc plate for Zn/MnO₂ dry cell according to claim 1, wherein the zinc plate comprises (by weight):
0.0015 % magnesium;
0.005 % indium;
0.0018 % lead;
0.0002 % cadmium;
the rest being zinc.

5. The zinc plate for Zn/MnO₂ dry cell according to claim 1, wherein the zinc plate comprises (by weight):
0.0015 % magnesium;
0.0005 % tin;
0.0018 % lead;
0.0002 % cadmium;
the rest being zinc.

6. The zinc plate for Zn/MnO₂ dry cell according to claim 1, wherein the zinc plate comprises (by weight):
0.0015 % magnesium;
0.002 % tin;
0.0018 % lead;
0.0002 % cadmium;
the rest being zinc.

7. The zinc plate for Zn/MnO₂ dry cell according to claim 1, wherein the zinc plate comprises (by weight):
0.0015 % magnesium;
0.005 % tin;
0.0018 % lead;
0.0002 % cadmium;
the rest being zinc.

8. A method of preparing the zinc plate for Zn/MnO₂ dry cell of claim 1 comprising: using zinc ingots of which zinc content is above 99.9955%, cadmium content ≦ 0.0005% and lead content ≦ 0.004%, adding 0.0005∼0.0030% magnesium and 0.001~0.005% indium or 0.0005∼0.005% tin; casting into thick plate under casting temperature of 400°C~500°C, rolling, cutting, and obtaining the zinc plate.
